# EUROPEAN PATENT APPLICATION

(11) **EP 4 567 622 A1**
(43) Date of publication of application: **11.06.2025**
(21) Application number: 24217432.4
(22) Date of filing: 04.12.2024
(51) Int. Cl.: G06F 16/242, G06F 16/901, G06F 16/9032

(54) **DATABASE QUERIES**

(30) Priority: 08.12.2023 IN 202311083740; 28.03.2024 GB 202404474
(71) Applicant: Fil Investment Management Limited, London EC4M 5AB (GB)
(72) Inventor: BERESFORD, Daniel, Wormit, Newport-on-Tay, DD6 8LJ (GB); GAUR, Sambhav, 110085 Delhi (IN); SHARMA, Abhishek, 121005 Haryana (IN); VERMA, Aaditya, 121005 Haryana (IN); GOYAL, Lakshay, 121001 Haryana (IN)
(74) Representative: Page White Farrer

(57) **Abstract**

A computer-implemented database management system for communicating with two or more databases, at least two of the two or more databases having a different database structure, is provided. The system comprises a semantics component, a knowledge graph component, and a query interface. The semantics component obtains data items from the databases and determine relationships therebetween. The knowledge graph component generates a knowledge graph based on the identified relationships. Each node of the knowledge graph is associated with a respective data item stored in the databases and defines a structured database query for accessing the respective data item in the databases. The query interface receives a user input, determines a knowledge graph query based on the user input, and provides the knowledge graph query to the knowledge graph component for identifying at least one node of the knowledge graph corresponding to the knowledge graph query, thereby obtaining a corresponding database query.

## Description

### Technical Field

The present disclosure relates to a computer-implemented database management system, a computer-implemented method for generating a structured database query, a computer-implemented database search method, and a computer program for implementing the same.

### Background

Databases can be queried by way of database queries in order to obtain search results. The queries used to obtain the results take into account the structure of the database and syntaxes used within the databases.

A user may define a database query via a user interface, through which the user may select from one or more option, or filters, to populate a template database query. The populated template is used to query the database and retrieve the query result.

In more sophisticated systems, a user can provide a natural language query. Natural language processing models can be trained to infer computer interpretable meaning from a natural language input, and thereby derive the database query.

### Summary

Where databases are not structured in the same way, different database queries are required to obtain results from databases of each structure. This presents challenges in circumstances in which it is unknown which database will store the relevant result.

According to a first aspect, there is provided a computer-implemented database management system for communicating with two or more databases, at least two of the two or more databases having a different database structure, the system comprising: a semantics component configured to obtain data items from the two or more databases and determine relationships between the data items; a knowledge graph component configured to generate a knowledge graph based on the identified relationships, wherein the knowledge graph comprises a plurality of nodes, wherein each node of the knowledge graph is associated with a respective data item stored in the databases, wherein the node defines a structured database query for accessing the respective data item in the databases; and a query interface configured to receive a user input via a user interface, determine a knowledge graph query based on the user input, and provide the knowledge graph query to the knowledge graph component for identifying at least one node of the knowledge graph corresponding to the knowledge graph query, thereby obtaining a corresponding database query.

The presented invention addresses a number of challenges in multi-national organisations with complex legal entity structures. Namely, the inability to quickly understand or visualise the multi-faceted relationships that exist between legal entities and other actors (e.g. regulators, board members, vendors) in the corporate data ecosystem. This leads to inefficiency, concentration risk, expensive analysis, and a lack of comprehensive insights.

This novel capability solves this problem by applying knowledge graph to create semantic relationships between the data and create a clear and comprehensive view of the organization's legal entities, and their interconnections. In doing so, it facilitates the creation of a coherent and all-encompassing representation of the organisation.

It centralizes and visualizes the data, enabling business users to access and explore the information in an intuitive and self-service manner. By doing so, the tool empowers users to make informed decisions, reduces reliance on a few experts, and supports various use cases, including board reporting, client queries, and regulatory change initiatives.

In some embodiments, the user input may be a natural language query, wherein the query interface may comprise a trained natural language model configured to take, as input, the natural language query and output the knowledge graph query.

In some embodiments, the knowledge graph component may be configured to render the knowledge graph on a user interface.

In some embodiments, the knowledge graph component may be further configured to: receive, from the query interface, the knowledge graph query; and identify at least one node of the knowledge graph corresponding to the knowledge graph query.

In some embodiments, the knowledge graph component may be further configured to render the identified at least one node corresponding to the knowledge graph query visually distinguishable from the other nodes of the knowledge.

In some embodiments, the knowledge graph component may be further configured to: obtain one or more attributes stored in association with the identified at least one node of the knowledge graph corresponding to the knowledge graph query; wherein the corresponding database query is derived from the one or more attributes.

In some embodiments, the knowledge graph component may be further configured to maintain a knowledge graph database storing attributes associated with each of the one or more nodes of the knowledge graph, wherein the attributes are useable to derive a database query for obtaining the data item stored in the two or more databases.

In some embodiments, the query interface is further configured to: receive the one or more attributed from the knowledge graph component; derive, based on the one or more attributes, the database query; and obtain, based on the database query, a data record from a first of the two or more databases, wherein the first database is identified in the database query, wherein the data record comprises the data item of the identified at least one node of the knowledge graph.

In some embodiments, the query interface may be further configured to derive, from the data record, a search result.

In some embodiments, the knowledge graph component may be configured to: provide the search result by processing the data record to determine one or more associated nodes of the knowledge graph; and render the one or more associated nodes of the knowledge graph visually distinguishable from the other nodes of the knowledge.

In some embodiments, the knowledge graph component is further configured to render, on the user interface, a text component derived from one or more attributes of the determined one or more associated nodes of the knowledge graph.

In some embodiments, the identified at least one node may be stored in association with two sets of attributes, each set comprising one or more attributes, wherein each set of attributes is associated with a respective one of the two or more databases, wherein the corresponding database query is derived from a first set of the two sets of attributes, wherein: the knowledge graph component is further configured to obtain a second set of the two sets of attributes; and the query interface is further configured to: receive the second set from the knowledge graph component; derive, based on the second set, a second database query; and obtain, based on the second database query, a second data record from a second of the two or more databases, wherein the second database is identified in the second database query and has a different database structure to the first database, wherein the second data record comprises the data item of the identified at least one node of the knowledge graph.

In some embodiments, the trained natural language model may be trained by taking as input training data comprising a set of natural language queries, and comparing generated candidate knowledge graph queries, generated in response to the training data, and target knowledge graph queries, wherein the target knowledge graph queries define the knowledge graph queries for obtaining data items from the two or more databases in response to the training data.

According to a second aspect, there is provided a computer-implemented method for generating a structured database query, the method comprising: extracting semantic relationships from two or more databases, wherein at least two of the two or more databases have a different database structure, thereby identifying relationships between data items stored in the two or more databases; and generating a knowledge graph based on the identified relationships, wherein the knowledge graph comprises a plurality of nodes, wherein each node of the knowledge graph is associated with a respective data item stored in the databases, wherein the node defines a structured database query for accessing the respective data item in the databases.

In some embodiments, the method may further comprise: storing, in a knowledge graph database, one or more attributes associated with each node of the knowledge graph; wherein the structure database query is derivable based on the one or more attributes.

In some embodiments, the method may further comprise: receiving a user input defining a user query via a user interface; determining, based on the user query, a knowledge graph query; and identifying, based on the knowledge graph query, at least one node of the knowledge graph, wherein the knowledge graph comprises a plurality of nodes.

In some embodiments, the method may further comprise: obtaining, from the knowledge graph database, the one or more attributes stored in association with the identified at least one node of the knowledge graph; and deriving the structure database query based on the obtained one or more attributes.

In some embodiments, the user input may be a natural language input, wherein determining the knowledge graph query comprises providing the natural language input as input to a trained natural language processing model, wherein the trained natural language processing model is configured to derive from a natural language input, the knowledge graph query for querying the knowledge graph.

According to a third aspect, there is provided a computer-implemented database search method for searching two or more databases, at least two of the two or more databases having a different database structure, the method comprising: receiving a user input via a user interface; determining, based on the user input, a knowledge graph query; identifying, based on the knowledge graph query, at least one node of a knowledge graph, wherein the knowledge graph comprises a plurality of nodes, wherein the knowledge graph is generated according to the method set out above; obtaining, based on the at least one identified node, a structured database query; and using the structured database query to obtain, from the two or more databases, a search result.

According to a fourth aspect, there is provided a non-transitory computer program product comprising instructions which, when implemented by a at least one processor, cause a computing device to be configured to implement the method or system of any preceding claim.

### Brief Description of the Drawings

To assist understanding of embodiment of the present disclosure and to show how such embodiment may be put into effect, reference is made, by way of example only, to the accompanying drawings in which:
Figure 1 shows a schematic diagram of a knowledge graph layer interfacing with a set of databases;
Figure 2 shows an example knowledge graph;
Figure 3 shows a schematic diagram illustrating the retrieval of search results based in a natural language query;
Figure 4 illustrates training a natural language processing model;
Figure 5 provides an example method for providing search results at a user interface based on a natural language query; and
Figure 6 provides an example knowledge graph user interface.

### Detailed Description of Embodiments

An organisation may store data associated therewith in a set of databases. The databases may relate to different entities of the organisation, which may have been acquired over time for example, or different functionalities within the organisation. Other database structures may be used to store organisation data. Database structures are known in the art and will not be described in more detail herein. In most instances, it is unlikely that the data is stored in a consistent manner across the databases, and the data may be considered scattered and in some cases seemingly unrelated. Therefore, querying the set of databases for where the database storing the target data is unknown is not trivial.

To represent the data stored in the set of databases, a knowledge graph can be used. A knowledge graph is a graph-structured data model which visually represents relationships between entities, with entities being visually represented by nodes of the knowledge graph and their relationships represented by edges. Knowledge graphs are known per se in the art and therefore will not be described in detail herein.

In the examples provided herein, the organisation is a company. Entities of the company used herein by way of example are subsidiaries and directors or other notable employees. Other entities may include organization, person, regulator, business line, country, region, company type, company status, division, subdivision, company secretarial group, Entity Classification, Group Interested In. It will be appreciated that the terms organisation and entity may be used to define other features of a hierarchical structure, with the organisation being a top level of the hierarchy and the entities being lower levels of the hierarchy.

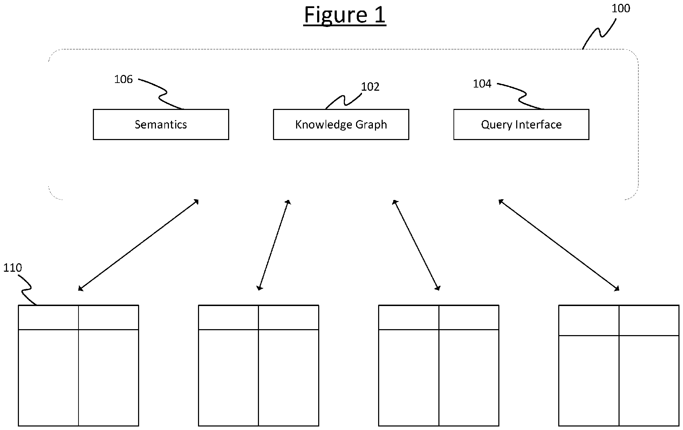

Figure 1 shows a knowledge graph layer 100 which communicates with a set of databases 110 of an organisation. The knowledge graph layer 100 provided can be used to represent the data stored in the databases 110 and query the databases 110. Thus, the knowledge graph layer 100 may be considered a data management system.

The knowledge graph layer 100 comprises a knowledge graph component 102, a query interface component 104, and a semantics component 106. The semantics component 106 is configured to convert the structure of data between that stored in the databases 110 and that used to generate knowledge graphs. The knowledge graph component 106 uses the data output by the semantics component 106 to generate a knowledge graph visualising relationships within the organisation. The query interface component 104 is configured to receive user provided inputs, via a user interface, and process the user provided inputs to determine knowledge graph queries, which are subsequently used to query the knowledge graph. The query interface component 104 further derives a database query based on results of the knowledge graph query, and queries the databases 110.

Each component 102, 104, 106 may communicate with any one of the other components 102, 104, 106, allowing messages and/or data to pass between two components 102, 104, 106 as required. Interactions between the components are described in more details below.

The user provided input may be a natural language query, with the query interface 104 being configured to process the natural language query to determine the knowledge graph query. Alternatively or additionally, user inputs may be provided by selecting options from a drop-down menu or filter, or a user selection of a node of the knowledge graph.

The knowledge graph layer 100 does not store data derived from the databases 110. Instead, the knowledge graph generated by the knowledge graph layer 100 provides references between data stored in the set of databases 110. In this way, the data stored in the databases 110 can be queried without replicating the data, thus providing a more efficient database querying system.

Databases 110 are known in the art. A database comprises a set of records, each record comprising a data item for each field, or attribute, defined in the database. In some instances, a record may only comprise data items for some of the fields, with other fields left empty. The records define relationships between data items in the context of the structure, or syntax, of the database.

The databases 110 and knowledge graph layer 100 may be stored and executed on one or more servers. In a distributed system, the databases 110 and knowledge graph layer 100 are stored and executed across multiple servers. In some embodiments, components of the knowledge graph layer 100 are executed of different servers, with the servers communicating with each other to execute the functions of the knowledge graph layer 100. The servers may communicate with each other via a network such as the Internet. In some embodiments, one or more databases 110 and/or the knowledge graph layer 100 may be provided by a cloud computing system.

A user device may also communicate with a server executing the knowledge graph layer 100 via the network. This allows a user interface (described below) to be provided on the user device for a user to interact with the knowledge graph layer, thereby providing user inputs and obtaining data stored in the databases 110.

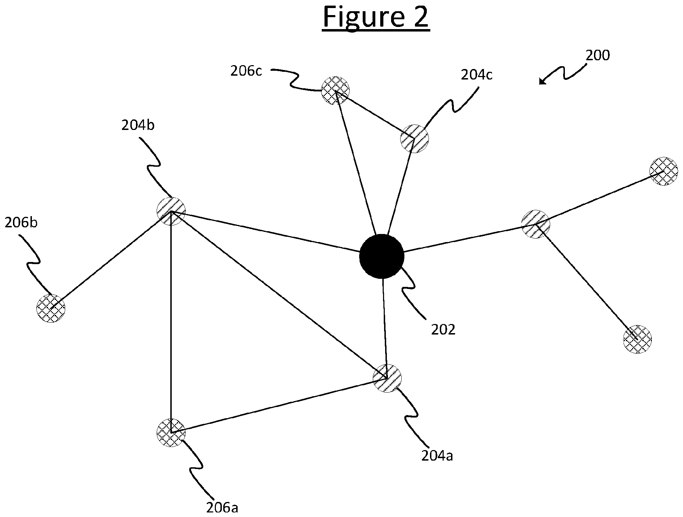

Figure 2 shows an example knowledge graph 200. The knowledge graph 200 comprises a primary node 202 corresponding to a parent company of the organisation. This is the top layer of the hierarchy of the organisation.

Four secondary nodes 204 are shown on the knowledge graph 200. These secondary nodes 204 correspond to entities which are in a second layer, directly below the top layer, of the hierarchy of the organisation. For example, the secondary nodes 204 may correspond to subsidiaries which are directly managed by the parent company. Each of the secondary nodes is shown directly connected to the primary node 202, indicating the direct relationship between the entities represented by these nodes 202, 204.

In the example of Figure 2, two of the secondary nodes 204a, 204b are also shown to be directly connected in the knowledge graph 200. Such a relationship may represent a shared governing body, for example. Other relationships may be represented by the knowledge graph 200 as defined by the data stored in the databases 110, which will be apparent.

The knowledge graph 200 also has five tertiary nodes 206. These nodes represent entities of the organisation which are in a third layer of the hierarchy, directly below the second layer. These entities may be, for example, directors or other senior employees.

Tertiary node 206a is shown to have a relationship with two secondary nodes 204a, 204b, while secondary node 204b has a relationship with two tertiary nodes 206a, 206b. In the first example, the entity represented by tertiary node 206a may be a directory of the two subsidiaries represented by secondary nodes 204a and 204b. In the second example, the subsidiary represented by secondary node 204b may have two directors, represented by tertiary nodes 206a and 206b. It will be appreciated that the number of connections, or relationships, between nodes is not limited and therefore can accurately represent the data stored in the databases 110.

The parent node 202 can be directly connected to any node of the knowledge graph 200, if such a relationship exists in the underlying metadata stored in the set of databases 110. For example, the parent node 202 is directly connect to the tertiary node 206c. The tertiary node 206c may represent a director of both the parent company represented by primary node 202 and secondary node 204c.

The relationships provided above are given by way of example only. The knowledge map 200 can be used to represent other relationships between entities as defined by the database data.

As set out above, the knowledge graph 200 is derived from data stored in the set of databases 110 which has been processed by the semantics component 106. The semantics component 106 extracts semantics from the databases 110 to obtain relationships between the stored data which is not stored in a uniform manner. Herein, the phrase "extracting semantics" may refer to a process of determining sematic relationships between data items or objects.

In order to extract the semantics from the scattered data stored in the databases 110, a Semantic Data Processor is defined manually. This allows the semantics to be extracted from metadata stored in the databases 110 for representing the data relationships in the knowledge graph 200. Relationships are defined at the Semantic Data Processor using attributes of nodes, as discussed in more detail below.

The Semantic Data Processor also extracts semantics based on the database metadata. That is, the Semantic Data Processor can process the database metadata to identify sematic relationships defined therein.

A user interface is provided at a user device of an administrator, who is granted access to the databases 110. The administrator inputs, via the user interface, syntaxes used in the databases 110 to define relationships. The semantics component 106 stores the used syntaxes and uses the stored syntaxes to extract the semantics from the databases 110. Defining the Semantic Data Processor of the semantics component may be referred to as compiling the semantics component 106.

As new databases 110 are introduced or generated, the semantics component is recompiled by defining any new syntaxes used within the databases 110 to define relationships, thereby allowing the semantics to be extracted from the database metadata.

Once the semantics component 106 has been compiled, it can be used to make stored data available in a structure useable by the knowledge graph component 102 to construct the knowledge graph 200.

The knowledge graph component 102 constructs the knowledge graph 200 such that each node 202, 204, 206 references, but does not replicate, a data item of a respective entity stored in the databases 110. The knowledge graph component 102 stores a knowledge graph database, which stores attributes for each node 202, 204, 206. The attributes stored for each node 202, 204, 206 may include a node name or identifier, key identifiers or primary keys, and a database identifier which identifies the database 110 in which the corresponding data object is stored.

The nodes may be said to define a structured database query. The attributes stored in association with a node define the way in which the data item associated with the node can be obtained from the relevant database, and thereby define the database query.

By referencing the stored data in this way, the knowledge graph can be queried to obtain attributes for constructing a structured database query, which is then used to query the databases 110 to obtain the stored data.

It will be appreciated that any one node may store attributes associated with multiple databases, such that multiple database queries can be derived therefrom. The entity associated with the node may be associated with multiple database records across databases with different structures. Since the structures of the databases are different, the structured database queries required to retrieve data stored in the databases is different. Therefore, to retrieve a data item or data record associated with an entity from two differently structured databases, two database queries are required.

Attributes may be stored in sets, with each set of attributes corresponding to one of the databases 110. A database query is then derived for each set of attributes. These queries are structured in the form required to query their respective databases. The query interface 104 comprises logic which is configured to determine, based on the obtained attributes, the number of database queries to derive and the structure of these queries. The query interface 104 derives the database queries which are then used to query the multiple databases with data items corresponding to the node of the knowledge graph 200, thereby obtaining query results from multiple difference databases having different database structures.

The use of the knowledge graph 200 also creates semantic relationships between legal entities, subsidiaries, affiliations, and other relevant data points in a unique manner to address the challenges arising from scattered and seemingly unrelated data to provide a comprehensive view of the organization's structure and operations.

As this capability is used to represent complex relationships and dependencies between legal entities and other actors, enabling a more profound understanding of their interconnections. This surpasses the limitations of conventional data management systems that struggle to capture intricate relationship comprehensively.

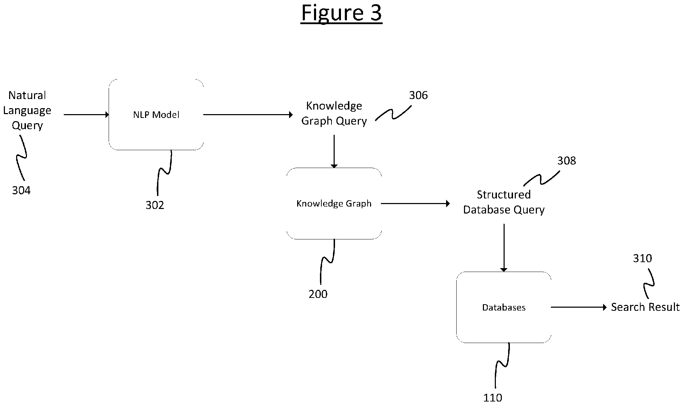

Figure 3 shows an example method for querying the databases 110 via the knowledge graph 200.

A natural language (NL) query 304 is received at a user interface. An example NL query 304 is "What are the active organisations inside Bermuda?". The NL query 304 is parsed by a trained natural language processing (NLP) model 302 to obtain a knowledge graph query 306. This knowledge graph query 306 is a structure query, structured in such a way as to allow the knowledge graph 200 to be queried to obtain a result.

The derived knowledge graph query 306 is used to query the knowledge graph 200. By querying the knowledge graph 200, one or more nodes 202, 204, 206 of the knowledge graph 200 are identified as results of the query 306. These nodes 202, 204, 206 reference data stored in the databases 110, and therefore provide attributes from which a structured database query 308 can be derived.

The structure database query 308 is then used to query the databases 110, thereby obtaining a search result 310. The search result 310 may be derived from one or more database entries.

Some example knowledge graph queried 306 derived using the trained NLP model 302 are provided below.

| Natural Language Query 304 | Knowledge Graph Query 306 |
|---|---|
| Who are the directors of FIL? | PREFIX neptune: <neptune-uri/ontology/> |
| | SELECT ?director |
| | WHERE { |
| | ?organisation neptune:name "FIL". |
| | ?organisation neptune:director ?person. |
| | ?person neptune:name ?director. |
| What are the active orgs inside Bermuda? | PREFIX neptune: <neptune-uri/ontology/> |
| | SELECT ?organisation |
| | WHERE { |
| | ?org_uri a neptune:Organisation; |
| | neptune:country ?country; |
| | neptune:companyStatus ?status. |
| | ?country neptune:name "Bermuda". |
| | ?status neptune:name "Active". |
| | ?org_uri neptune:name ?organisation. |
| | |
| Who are the directors being part of more than 2 orgs? | PREFIX neptune: <neptune-uri/ontology/> |
| | SELECT ?director (COUNT(?org) AS ?orgCount) |
| | WHERE { |
| | ?org a neptune:Organisation; |
| | neptune:director ?person. |
| | ?person neptune:name ?director. |
| | } |
| | GROUP BY ?director |
| | HAVING (COUNT(?org) > 2) |
| Find out for me how directors and regulators are connected? | PREFIX neptune: <neptune-uri/ontology/> |
| | SELECT ?director ?organisation ?regulator |
| | WHERE { |
| | ?org_uri a neptune:Organisation; |
| | neptune:director ?person; |
| | neptune:regulator ?regulator_uri. |
| | ?person neptune:name ?director. |
| | ?org_uri neptune:name ?organisation. |
| | ?regulator_uri neptune:name ?regulator. |
| Find out the top region having orgs containing highest number of directors? | PREFIX neptune: <neptune-uri/ontology/> |
| | SELECT ?country (COUNT(DISTINCT ?director) AS |
| | ?directorCount) |
| | WHERE { |
| | ?org_uri a neptune:Organisation; |
| | neptune:director ?director; |
| | neptune:country ?country_uri. |
| | ?country_uri neptune:name ?country. |
| | } |
| | GROUP BY ?country |
| | ORDER BY DESC(?directorCount) |
| | LIMIT 1 |

It can be seen that the outputted knowledge graph query 306 defines a set of criteria to be met, based on the natural language query 304, that is attributes that the search result must have. For example, in response to the query "What are the active orgs inside Bermuda?", a country name attribute is set to "Bermuda", and a status attribute is set to "active". The search result must therefore be associated with both of these defined attributes.

A result attribute type is also defined. In the same example, the search attribute type is "organisation", with the value of said attribute being the search result. It will be appreciated that, depending on the NL query 304, the search result may not be the value of an attribute. For example, the result may instead be a count of all entities satisfying the set of criteria. Other types of search result will be apparent.

The incorporation of NLP for search and mapping of database metadata to a knowledge graph enables users to perform more complex queries, such as understanding the impact of strategic or regulatory programs across the organization's structure.

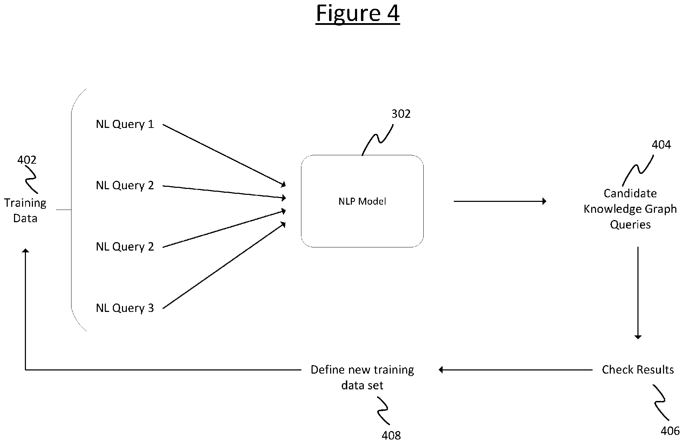

To obtain the knowledge graph queries 306, the natural language processing model 302 must be trained. Figure 4 provides an example method for training the NL processing model 302.

A pre-trained generic natural language processing model 302, or other machine learning model, such as spaCy, or an untrained model 302 may be used as the starting point for training the natural language processing model 302.

A first set of training data 402 is defined. Each piece of training data is a natural language query. The first set of training data 402 is then parsed by the untrained natural language processing model 302 to generate candidate knowledge graph queries 404.

The candidate knowledge graph queries 404 are compared, manually, to target knowledge graph queries for each query of the training data set 402. That is, an operator defines, for a given natural language query of the training data 402, an expected (target) knowledge graph query which would be used to query the knowledge graph 200 based on the natural language query 304. This is then compared to the candidate knowledge graph query 404 generated by the natural language processing model 302.

Based on the comparison, a new training data set 408 is defined. This training data set 408 comprises new natural language queries, and may include one or more of the natural language queries from the first training set. This step of defining the new training set 408 may be referred to as fine tuning the training data set.

The same process is followed with the new training data set 408, i.e. the training data set 408 is parted by the model 302 to generate candidate knowledge graph queries 404, which are compared 406 to the target knowledge graph queries, and a new training data set 408 defined.

This feedback loop is iterated until the candidate knowledge graph queries 404 are sufficiently similar to the target knowledge graph queries. Sufficiently similar may require the candidate and target queries to be identical, written in such a way that the result of implementing the queries is the same, or there may be a margin of error allowed for a proportion of incorrect candidate knowledge graph queries 404.

The training data sets 402, 408 used to train the natural language processing model 302 are defined so as to include the possible attribute types and result types, such that the natural language processing model 302 is able to process a range of natural language queries. In a preferred embodiment, the model is trained using around 5000 attributes and progressing to obtain a trained model 302 with the desired level of accuracy.

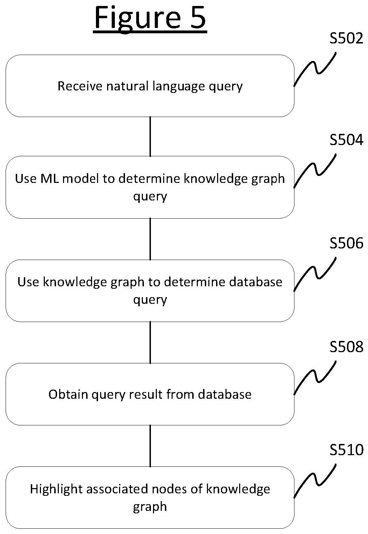

Figure 5 provides an example method for using the knowledge graph 200 and the knowledge graph layer 100 once the natural language processing model 302 has been trained.

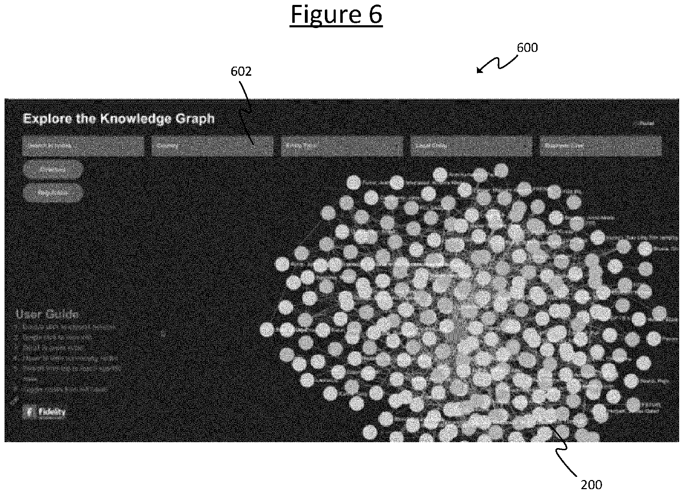

Figure 6 provides an example knowledge graph user interface 600 for rendering the knowledge graph 200 derived from the data stored in the set of databases 110 by the knowledge graph layer 100.

The method of Figure 5 will be described with reference to Figure 6.

The knowledge graph user interface 600 compromises five attribute selector menus 602, each associated with an attribute type. A user can provide an input by selecting an attribute values for one or more of the attributes types from the drop-down menus 602. For example, the user can select "Bermuda" from the country menu 602, thereby providing a query for the entities provided on the knowledge graph which have a country attribute of Bermuda. In the example of Figure 6, the attribute selector menus 602 correspond to attributes "country", "entity type", "legal entity", and "business line". Other attributes may be provided for filtering.

Alternatively, the user can provide a natural language input via a text input portion of the knowledge graph user interface 200 (not shown). The user can provide a text string query, such as the natural language queries 304 provided above. The natural language query 304 is received, step S502, at the query interface 104 of the knowledge graph layer 100.

The natural language query 304 is then parsed by the trained NLP model 302 to determine the knowledge graph query 306, step S504, which is then used to query the knowledge graph 200 at the knowledge graph component 102 to identify one or more nodes of the knowledge graph satisfying the knowledge graph query 306. The node(s) which satisfy the query are used to determine attributes for, and the structure of, the structured database query 308, step S506.

The structured database query 308 is used by the query interface 104 to query the databases 110 at step S508 to obtain the search query result 310. The search query result 310 may comprise one or more attribute values extracted from the databases 110.

The query interface 104 obtains the search results 310 which comprise the data stored in the databases 110. Based on the obtained data, the query interface 104 converts the obtained data into a visual "connected nodes" format using a visualisation library of the knowledge graph component 102, which is configured to render visualisations at the knowledge graph user interface 600, step S510. The "connected nodes" format highlights relevant nodes of the knowledge graph 200, for example the node of the knowledge graph 200 corresponding to the knowledge graph query and/or nodes of the graph which are considered to be associated with the node satisfying the knowledge graph query based on the database query results. Text details may additionally or alternatively be displayed on the knowledge graph 200. Node text details may be derived from the knowledge graph semantics and/or database data objects.

For example, for the query "who are the directors of FIL?", the nodes 204, 206 of the knowledge graph 200 corresponding to the directors of FIL are highlighted, or otherwise rendered visually distinct from the other nodes 202, 240, 206 of the knowledge graph 200. The names of the directors may also be shown next to their associated node 204, 206.

Other nodes which are considered associated with the directors may also be highlighted, or otherwise rendered visually distinct. Continuing the example above, nodes associated with the locations of the directors or their department may also be highlighted, or shown in a different colour. These nodes may have text details rendered therewith.

Nodes of the knowledge graph 200 may be highlighted or otherwise rendered visibly distinct in response to other user inputs. For example, the user may provide an input using one or more of the attribute selector menus 602. The nodes of the knowledge graph corresponding to the user input are then rendered visibly distinct from the other nodes of the graph 200.

In some embodiments, a natural language result is derived from the obtained data. The natural language result may be the attribute value stored in the database 110. This would be the case for a natural language query 304 such as "Who are the directors of FIL?". The natural language result would be the names of the relevant entities as stored in the databases 110. The query interface 104 uses the obtained results to provide a natural language result.

In another example, the natural language result may be derived from the obtained database, rather than presenting the stored data. For example, for the natural language query 304 "Find out for me how directors and regulators are connected", the relevant database entries may not provide a user with useful, or easily interpretable data. To provide the user with user interpretable data, the search results 310 are provided to the query interface 104, which generates a result in natural language. In this example, the natural language result may be a number, which is derived based on a count of the obtained database objects.

At step S512, the natural language result is rendered, by the query interface 104, on the knowledge graph interface 200. Relevant nodes of the knowledge graph 200 are also highlighted.

A user may also provide an input by actively or passively selecting a node of the knowledge graph 200. Passively selecting a node may be achieved by, for example, hovering or scrolling over the node with a user guided cursor. Actively selecting a node may include, for example, clicking on the node of the knowledge graph 200. When a node is selected, either actively or passively, the node may be rendered visually distinct form the other nodes of the knowledge graph 200, as described above.

When a node is selected or identified in response to a user input, the relationships associated with the node may also be rendered visibly distinct from other relationships on the knowledge graph 200. The relationships between nodes are stored in the knowledge graph database at the knowledge graph component 202. In some embodiments, nodes which are not connected to a selected or identified node may be removed from the knowledge graph 200.

The nodes of the knowledge graph are rendered in different colours depending on the entity type. The entity type may also correspond to the hierarchical level of the entity within the organisation structure. For example, the first level node 202 representing the parent company is rendered in purple, nodes representing directors (a personnel entity) are rendered in green, and nodes representing legal entities, such as subsidiary companies, are rendered in blue. Other colours or visually differentiation methods may be used.

The knowledge graph layer 100 centralises legal entity data and data relating to legal entities (e.g. risk data, operational data, application data, intra-group outsourcing arrangements) from multiple sources and systems, presenting it in an intuitive front-end via the knowledge graph user interface 600. The visualization of the data simplifies the understanding of complex corporate group relationships, making it easier for users to gain insights.

The knowledge graph layer 100 is versatile and adaptable, making it a valuable asset for addressing various organisational needs.

The system and method described herein provides an improved method for database querying through the use of structured database queries derived from natural language queries, via structured knowledge graph queries.

In addition to the technical advantages, the system provides a number of business advantages.

Improved Corporate Governance: By centralizing and visualizing legal entity data, the tool improves efficiency by reducing time spent on accessing scattered information. It also brings transparency to the organizational structure, promoting a deeper understanding of how the organization functions.

Empowering Business Users: The intuitive front-end and self-service capabilities empower business users to interact with the data directly. This not only reduces reliance on a handful of experts but also fosters collaboration and encourages a broader understanding of the organization's operations.

Informed Decision-Making: The visualization and insights provided by the tool support better decision-making across various aspects of the business, including compliance, strategic planning, and client engagement. The organization can identify growth opportunities, potential impact areas. Armed with this knowledge, strategic decisions can be made more confidently, minimizing uncertainties, and maximizing opportunities for growth and success.

Cost and Time Savings: By streamlining access to legal entity data and promoting self-service capabilities, the tool can lead to cost and time savings for the organization by reducing demand on experts.

Compliance: The tool can help organizations to understand regulatory coverage and impact by providing a clear and concise overview of their corporate structure. This can help to ensure that organizations are meeting all of their regulatory requirements, and analyse the impact of future regulation on downstream activities.

Operation Efficiency: The lack of a clear and comprehensive view of the organization's structure can lead to inefficiencies in various processes. With the implementation of semantic relationships through the knowledge graph, the invention creates a coherent representation of legal entities and their connections. This enables streamlined workflows, optimized resource allocations, enhanced collaborations across different departments, thereby improving efficiency significantly.

Various methods and devices have been described. It should be appreciated that these methods may be implemented in apparatus or devices comprising any suitable circuitry. Some embodiments may be implemented by at least one memory and at least one processor. The memory is provided by memory circuitry and the processor is provided by processor circuitry. Some embodiments may be provided by a computer program running on the at least one processor. The computer program may comprise computer implemented instructions which are stored in the at least one memory and which may be run on the at least one processor. A computer program product may be provided which comprises computer program product comprising code embodied on a computer-readable medium which is configured to be executed on a processor of the computer or user device. In some embodiments, a non-transitory computer readable storage device may be provided to store program code instructions that, when executed by at least one processor causes any of the above described methods to be performed.

A person skilled in the art will realise that the different approaches to distributing and storing data are not exhaustive, what is described herein are certain preferred embodiments. It is possible to implement the way in a number of variations without departing from the scope of the invention as claimed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented database management system for communicating with two or more databases, at least two of the two or more databases having a different database structure, the system comprising:
a semantics component configured to obtain data items from the two or more databases and determine relationships between the data items;
a knowledge graph component configured to generate a knowledge graph based on the identified relationships, wherein the knowledge graph comprises a plurality of nodes, wherein each node of the knowledge graph is associated with a respective data item stored in the databases, wherein the node defines a structured database query for accessing the respective data item in the databases; and
a query interface configured to receive a user input via a user interface, determine a knowledge graph query based on the user input, and provide the knowledge graph query to the knowledge graph component for identifying at least one node of the knowledge graph corresponding to the knowledge graph query, thereby obtaining a corresponding database query.

2. The system of claim 1, wherein the user input is a natural language query, wherein the query interface comprises a trained natural language model configured to take, as input, the natural language query and output the knowledge graph query.

3. The system of any preceding claim, wherein the knowledge graph component is further configured to:
receive, from the query interface, the knowledge graph query; and
identify at least one node of the knowledge graph corresponding to the knowledge graph query.

4. The system of claim 3, wherein the knowledge graph component is further configured to:
obtain one or more attributes stored in association with the identified at least one node of the knowledge graph corresponding to the knowledge graph query;
wherein the corresponding database query is derived from the one or more attributes.

5. The system of claim 4, wherein the knowledge graph component is further configured to maintain a knowledge graph database storing attributes associated with each of the one or more nodes of the knowledge graph, wherein the attributes are useable to derive a database query for obtaining the data item stored in the two or more databases.

6. The system of claim 4 or claim 5, wherein the query interface is further configured to:
receive the one or more attributes from the knowledge graph component;
derive, based on the one or more attributes, the database query; and
obtain, based on the database query, a data record from a first of the two or more databases, wherein the first database is identified in the database query, wherein the data record comprises the data item of the identified at least one node of the knowledge graph.

7. The system of claim 6, wherein the query interface is further configured to derive, from the data record, a search result.

8. The system of claim 7, wherein the knowledge graph component is configured to:
provide the search result by processing the data record to determine one or more associated nodes of the knowledge graph; and
render the one or more associated nodes of the knowledge graph visually distinguishable from the other nodes of the knowledge.

9. The system of claim 6 or any claim dependent thereon, wherein the identified at least one node is stored in association with two sets of attributes, each set comprising one or more attributes, wherein each set of attributes is associated with a respective one of the two or more databases, wherein the corresponding database query is derived from a first set of the two sets of attributes, wherein:
the knowledge graph component is further configured to obtain a second set of the two sets of attributes; and
the query interface is further configured to:
receive the second set from the knowledge graph component;
derive, based on the second set, a second database query; and
obtain, based on the second database query, a second data record from a second of the two or more databases, wherein the second database is identified in the second database query and has a different database structure to the first database, wherein the second data record comprises the data item of the identified at least one node of the knowledge graph.

10. A computer-implemented method for generating a structured database query, the method comprising:
extracting semantic relationships from two or more databases, wherein at least two of the two or more databases have a different database structure, thereby identifying relationships between data items stored in the two or more databases; and
generating a knowledge graph based on the identified relationships, wherein the knowledge graph comprises a plurality of nodes, wherein each node of the knowledge graph is associated with a respective data item stored in the databases, wherein the node defines a structured database query for accessing the respective data item in the databases.

11. The method of claim 10, wherein the method further comprises:
storing, in a knowledge graph database, one or more attributes associated with each node of the knowledge graph;
wherein the structure database query is derivable based on the one or more attributes.

12. The method of claim 10 or claim 11, wherein the method further comprises:
receiving a user input defining a user query via a user interface;
determining, based on the user query, a knowledge graph query; and
identifying, based on the knowledge graph query, at least one node of the knowledge graph, wherein the knowledge graph comprises a plurality of nodes.

13. The method of claim 11 and claim 12, wherein the method further comprises:
obtaining, from the knowledge graph database, the one or more attributes stored in association with the identified at least one node of the knowledge graph; and
deriving the structure database query based on the obtained one or more attributes.

14. A computer-implemented database search method for searching two or more databases, at least two of the two or more databases having a different database structure, the method comprising:
receiving a user input via a user interface;
determining, based on the user input, a knowledge graph query;
identifying, based on the knowledge graph query, at least one node of a knowledge graph, wherein the knowledge graph comprises a plurality of nodes, wherein the knowledge graph is generated according to the method of claim 10;
obtaining, based on the at least one identified node, a structured database query; and
using the structured database query to obtain, from the two or more databases, a search result.

15. A non-transitory computer program product comprising instructions which, when implemented by a at least one processor, cause a computing device to be configured to implement the method or system of any preceding claim.
